# EUROPEAN PATENT SPECIFICATION

(11) **EP 1 943 165 B1**
(45) Date of publication and mention of the grant of the patent: **15.06.2011**
(21) Application number: 06804442.9
(22) Date of filing: 27.10.2006
(51) Int. Cl.: B65D 83/38, B65D 8/04, B65D 53/02

(54) **PLASTIC AEROSOL CONTAINER WITH IMPROVED ANNULAR COLLAR**
AEROSOLBEHÄLTER AUS KUNSTSTOFF MIT VERBESSERTEM RINGFÖRMIGEN BUND
RECIPIENT PLASTIQUE D'AEROSOL AVEC UNE BAGUE ANNULAIRE RENFORCEE

(30) Priority: 03.11.2005 AU 2005906098
(43) Date of publication of application: 16.07.2008
(73) Proprietor: Southern Star Corporation, Labuan, FT 87000 (MY)
(72) Inventor: SALAMEH, Asim, Macquarie Links, New South Wales 2565 (AU)
(74) Representative: Beyer, Andreas
(86) International application number: PCT/AU2006/001614
(87) International publication number: WO 2007/051229

(56) References cited:
- WO-A1-2005/082744
- WO-A1-2006/032113
- US-A- 4 917 271
- US-A- 5 031 384
- US-A- 5 630 530
- US-A- 5 865 337
- US-B1- 6 390 326

## Description

### Background of the Invention

The present invention relates to an aerosol container formed of plastics material, preferably PET, and which is adapted to dispense pressurised or aerosol products.

In particular, the present invention relates to the type of container described in the Applicant's earlier Australian Patent Application No. 2004905486, and, International Application No. PCT/AU2005/001474.

### Description of the Prior Art

US 4 917 271 discloses a container for dispensing a pressurized product, said container including a body, formed of plastics material, having a shaped neck about an opening, a collar shaped to straddle external and internal walls of said opening to form a shaped lip therearound, and be attached to said body, and a dispensing valve for attachment to said collar, said valve including an outer flange formed of malleable material and which is shaped to straddle said lip and be retained thereto by being compressed therearound.

US 6 390 326 B1 relates to a pressure vessel including a body with a closed end and a neck extending from the other end of the body and enclosing an opening. A metal collar is mounted to the neck. A valve device is engaged with an inner periphery of the neck and has a peripheral wall extending through the opening. The peripheral wall is folded outward to wrap and position the collar.

The reference to any prior art in this specification is not, and should not be taken as, an acknowledgement or any form of suggestion that that prior art forms part of the common general knowledge.

As described in the Applicant's earlier afore-mentioned Patent Applications, containers for dispensing pressurised products have been herebefore primarily constructed of metal. Such metal containers have a number of inherent shortcomings, which have resulted in some relatively unsuccessful efforts to replace such metal containers with containers formed of plastics.

The Applicant's earlier Patent application provided significant advances in pressurised or aerosol containers, manufactured of plastics material, which overcame a number of deficiencies, by providing a container which included a plastics body, a shaped collar, and, a dispensing valve. The body was stretch blow moulded from polyethylene terephthalate (PET) or like plastics material, and had a shaped neck surrounding an opening. The collar was also injection moulded from plastics material and was shaped to be snap-fitted to the shaped neck of the body about the opening. The dispensing valve was thereafter able to be attached to the neck/collar, and, included an outer flange which was formed of malleable material, and which was shaped to be fitted about and be retained to the collar by being compressed therearound. '

The Applicant's earlier Patent application also provided an improved method of manufacturing the container, including the steps of, firstly, injection moulding a pre-form, wherein the pre-form included a shaped neck which was able to be thereafter supported in a stretch blow moulding apparatus, secondly, stretch blow moulding the preform, such that a container extended from the shaped neck, thirdly, cutting the extremity of the neck from the container, such that the neck surrounded an opening, fourthly, snap fitting an injection moulded plastics collar to the neck of the container in a position which surrounded the opening, and, finally, installing a dispensing valve to the neck/collar, the valve including an outer flange formed of malleable material which was able to be snap fitted and retained to the collar by being compressed therearound.

The Applicant's earlier Patent application therefore provided an environmentally friendly aerosol container, which was able to be manufactured inexpensively, using simple steps, but without the inherent disadvantages of the prior art devices.

Whilst the Applicant's earlier Patent application provided significant advantages over the prior art, the Applicant has now identified alternative versions of the PET aerosol container which have differences from the Applicant's earlier version, and which provides enhanced benefits thereover, including the ability of being able to contain higher pressures within the container. The Applicant's has also invented improvements in relation to the maintaining attachment of the collar to the container and, has achieved a design which has comparable characteristics to prior art metal and aluminium containers, whilst having the advantages of using PET type plastics.

### Summary of the Invention

The present invention seeks to provide a plastics aerosol container which overcomes disadvantages of prior art aerosol containers.

The present invention seeks to overcome the disadvantages of the prior art, in particular, by providing a unique collar design which is formed of plastics material, which is capable of being snap-fitted or screwed-on to the neck of the body, such that is does not become dislodged from its position during transport or during the filling process, as happens with the prior art, but, which straddles the internal and external walls of the opening.

In one broad form, the present invention provides an aerosol container for dispensing a pressurised product, said container including:
a body, formed of PET or like plastics material, having a shaped neck about an opening;
a collar which straddles the external and internal walls of said opening to form a shaped lip therearound, and, be attached to said body; and,
a dispensing valve attached to said collar, said valve including an outer flange formed of malleable material and which is shaped to straddle said lip and be retained thereto by being compressed therearound.

Preferably, said external wall of said shaped neck includes a recess therearound, and said collar includes an annular protrusion extending inwardly therefrom, such that said protrusion cooperates with said recess, such that said collar is snap-fitted to said neck of said body.

Alternatively, but also preferably, said external wall of said shaped neck includes an annular protrusion therearound, and said collar includes an annular recess on its inside wall, such that said protrusion cooperates with said recess, such that said collar is snap-fitted to said neck of said body.

In yet another alternatively but also preferred form, said collar and said shaped neck are provided with cooperating screw threads, such that said collar may be screwed on to said neck of said body.

Preferably, said collar is formed of PET or like plastics material.

Also preferably, one or more strengthening ribs (protruding internally and externally) are provided therearound.

Preferably, said body is provided with lid engaging means, for releasable engagement of a lid.

Also preferably, said body is provided with base engagement means, for a base to be attached thereto.

### Brief Description of the Drawings

The present invention will become more fully understood from the following detailed description of a preferred but non-limiting embodiment thereof, described in connection with the accompanying drawings, wherein:
Figure 1 illustrates a perspective view of the top of the plastics aerosol container formed in accordance with a preferred embodiment of the present invention;

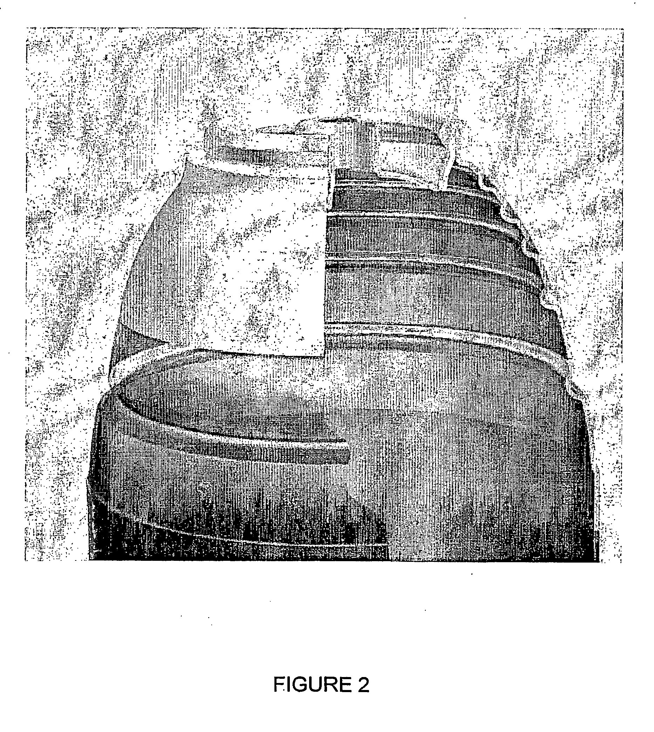

Figure 2 illustrates a partially cut-away view of the plastics aerosol container shown in Figure 1;
Figure 3 illustrates an elevational view of a preferred embodiment of the container of the present invention;
Figure 4 illustrates a cross-sectional view of the collar of the present invention;

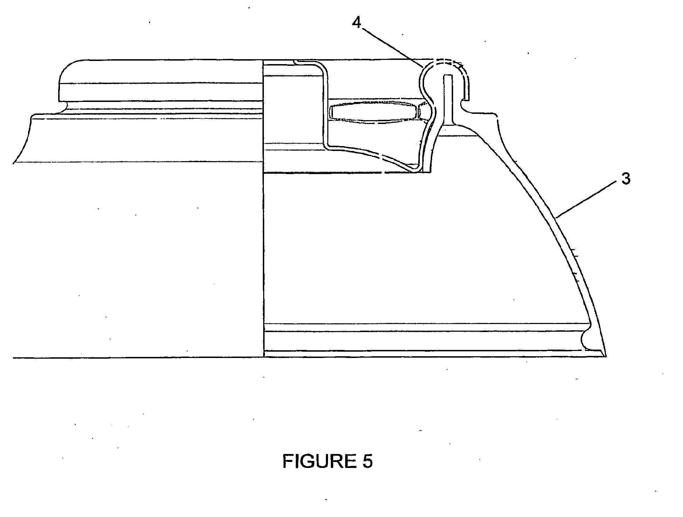

Figure 5 illustrates a partially cut-away cross-sectional view of the top of the container in accordance with the present invention;
Figure 6 illustrates, in Figures 6(a) to 6(e), various views during the assembly of the collar to the container, and, thereafter the attachment of the dispensing valve to the container, in accordance with the present invention;
Figure 7 illustrates an exploded view of a plastics aerosol container, having a screw on collar, in accordance with an alternatively preferred embodiment of the present invention; and
Figure 8 illustrates a partially cut-away view of the plastics aerosol container of Figure 7;
Figure 9 illustrates various views of the collar of the embodiment of Figures 7 and 8.

### Detailed Description of Preferred Embodiment

Throughout the drawings, like numerals will be used to identify similar features, except where expressly otherwise indicated.

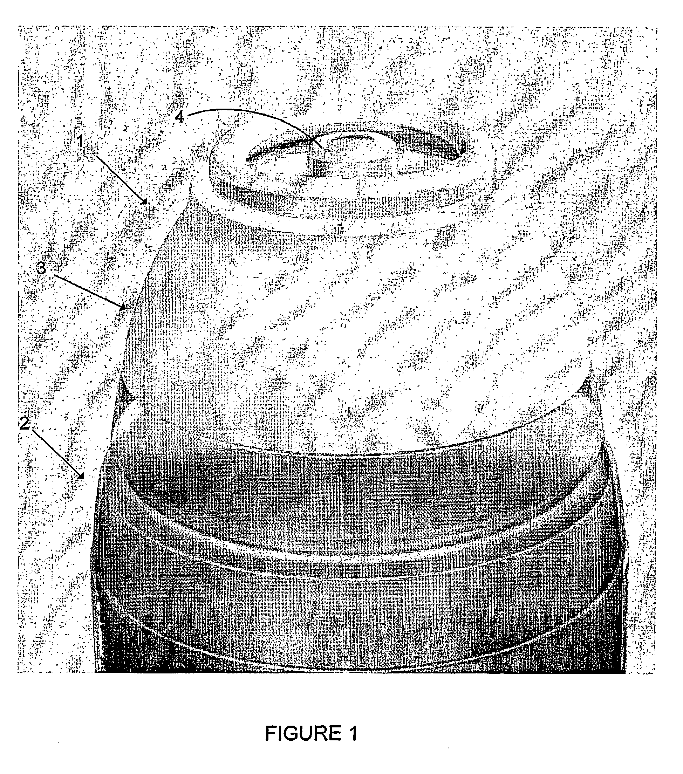

As shown in Figure 1, a container generally designated by the numeral 1, is formed of plastics material, and has a body portion 2, a collar 3, and a valving mechanism 4.

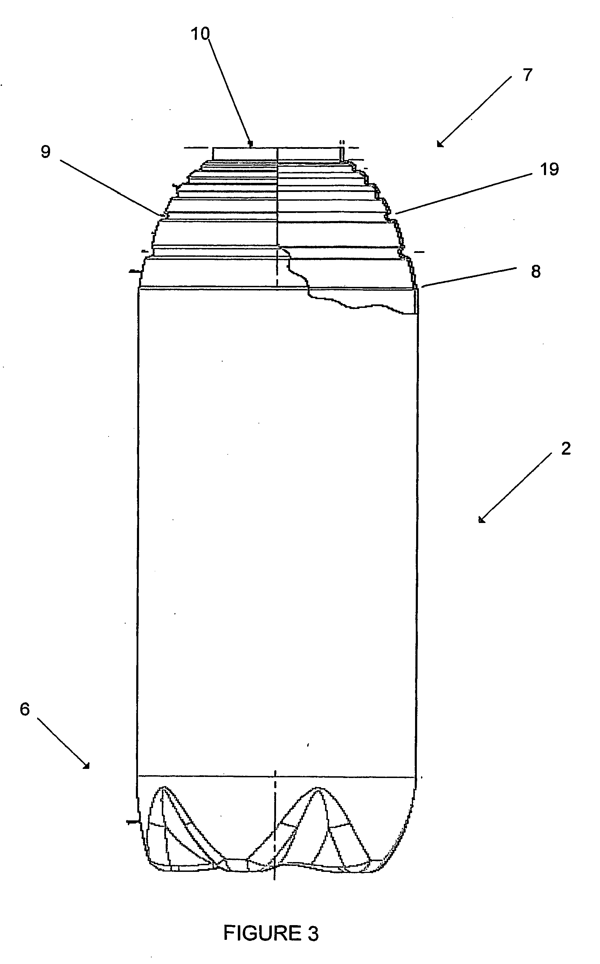

The body portion 2, as perhaps best illustrated in Figure 3, has a base 6 at a first end thereof, and a neck portion 7 at a second end thereof. The body 2, including its base and neck portions, are integrally formed by stretch blow moulding plastics material, such as a polyethylene terephthalate (PET) from a preform, as described in the Applicant's earlier aforementioned Patent applications. The body 2 may incorporate a rebated portion 8 to which a cap may be neatly fitted to the container, an annular recess 9 to which the collar 3 is adapted to engage, and one or more ribs 19, either outwardly or inwardly protruding, which may act as alternative engagement points for the cap or closure or other components, and/or as strengthening ribs to provide structural rigidity to the container 1, particularly when pressurised.

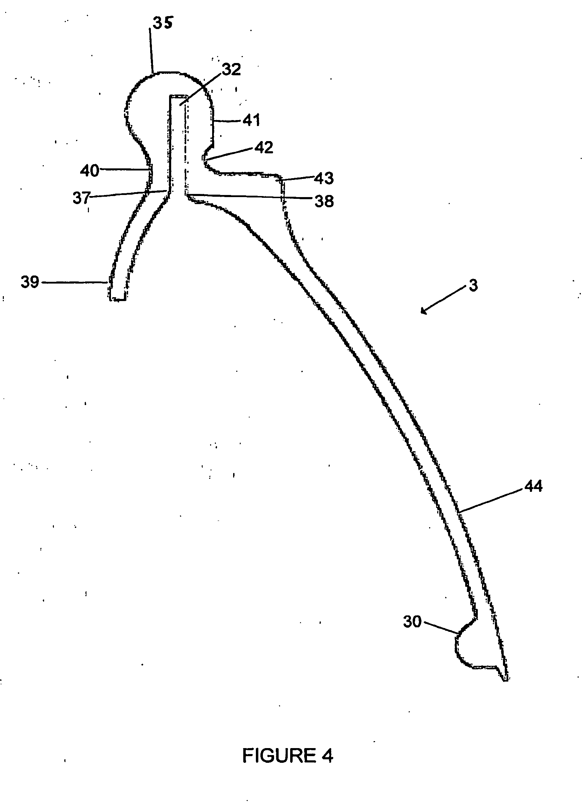

An opening 10 is formed in the top of the neck 7, to receive the dispensing valve (described hereinafter). The collar, illustrated by reference numeral 3, is best illustrated in Figure 4, and is formed by injection moulding from plastics and has the characteristics of being strong and rigid, with some degree of flexibility, such that it provides significant strength to the neck 7 of the body 2, which is important when housing a pressurised product, whilst having some degree of flexibility. Figure 4 illustrates an embodiment wherein the collar 3 is snap fitted to the neck 7 of the body 2. This is achieved by the provision of an annular recess 9 on the neck 7 of the body 2 which is adapted to engage an annular protrusion 30, which protrudes inwardly from the inner surface of the collar 3.

The embodiment of the collar 3 of the present invention is of different shape to the collar illustrated in the Applicant's aforementioned Patent Applications. In particular, it will be noted that the collar 3 is shaped to straddle the internal and external walls 34 and 33 of the opening 10 to form a shaped lip 35 therearound (the purpose of which will be described hereinafter).

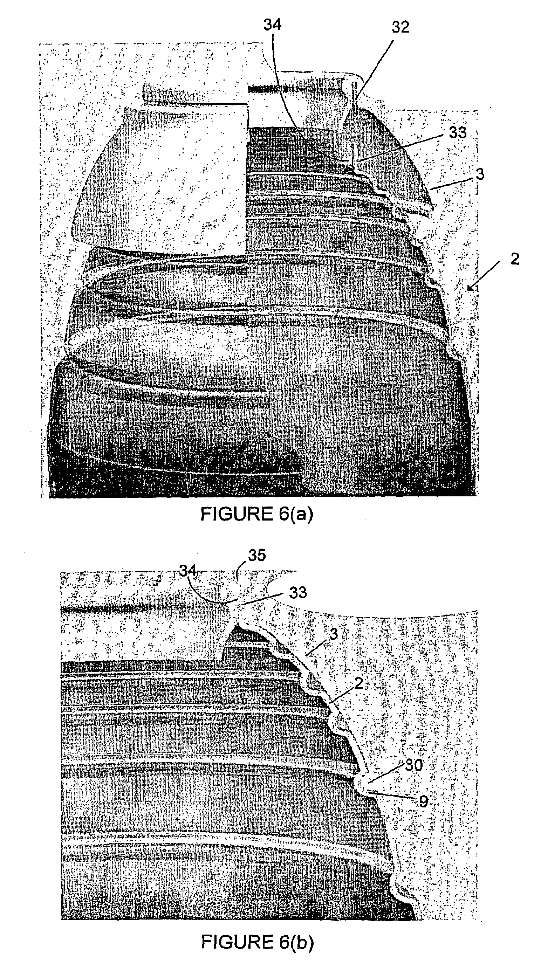

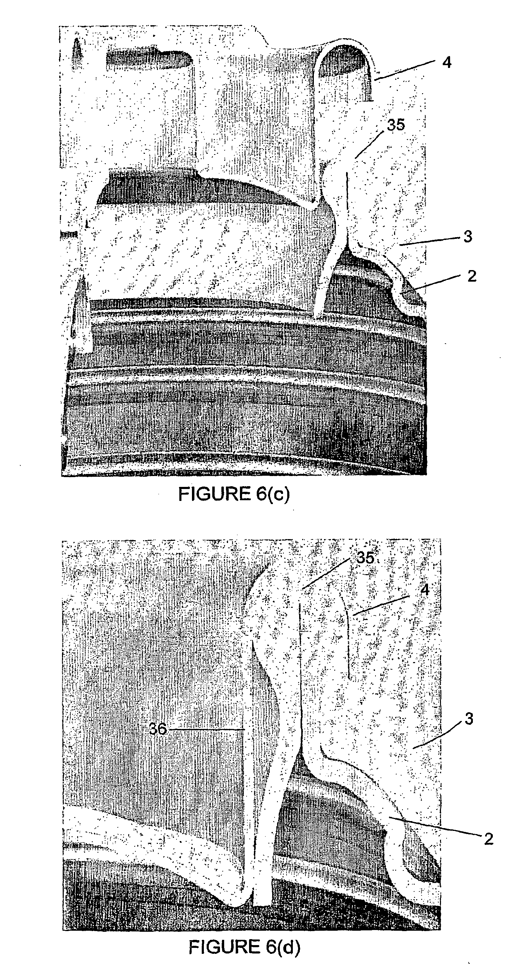

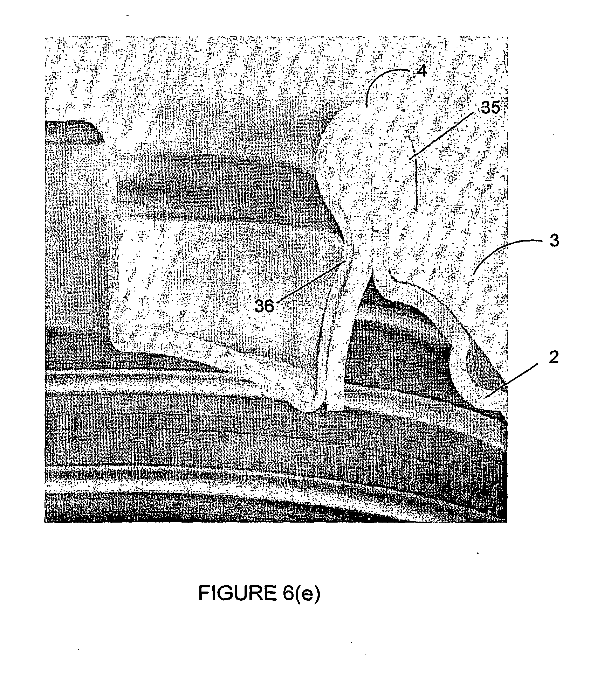

The assembly of the collar 3, and thereafter the dispensing valve 4, onto the body 2 is best illustrated in Figure 6.

Figure 6(a) shows how the collar 3 is installed on the body 2. As can be seen, the collar 3 is lowered such that a groove 32 straddles the external and internal walls 33 and 34 of the opening 10 of the body 2.

Figure 6(b) shows the collar 3 installed on the body 2, whereby the annular protrusion 30 snap-fits into the rib 9, and, whereby the interval and external walls 34 and 33, respectively, are straddled by the collar 3 and whereby a shaped lip 35 is formed around the opening 10 of the body 2.

Figure 6(c) shows how the dispensing valve 4 is thereafter installed about the shaped lip 35. The dispensing valve 4 is preferably formed of malleable material, such as aluminium.

Once installed into the position shown in Figure 6(d), the internal wall 36 of valve 4 may be compressed.

Figure 6(e) shows the compressed position of the valve 4 after being affixed to the collar 3 neck 7 of the body 2.

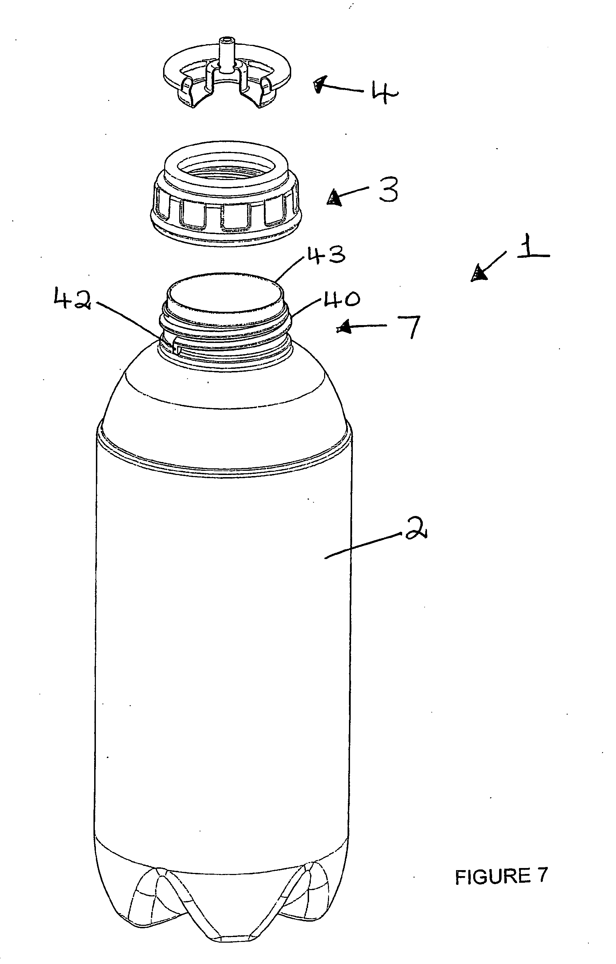

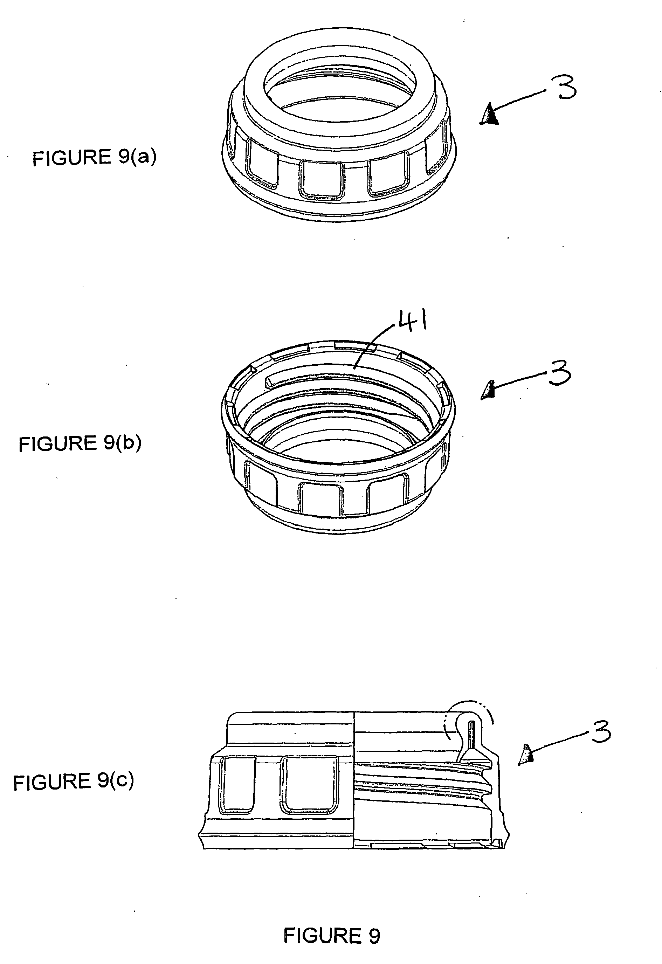

In Figures 7, 8 and 9 is shown an alternatively preferred embodiment of the present invention, utilising a screw cap collar 3, instead of the snap-fit collar of the previously described embodiments. As shown in Figures 7, 8 and 9, the neck portion 7 of the body 2 is provided with a screw thread 40, onto which the collar 3 may be secured. The collar 3, as best illustrated in Figure 9, is provided with a complementary screw thread 41 compatible with the screw thread 40 of the neck 7 of the body 2. The screw thread 40 may be provided with a registration stop piece 42, which enables the collar 3 to be screwed onto the neck 7 until registered. An appropriate pinch seal may be provided around the periphery of the neck 7 as indicated by item 43, such that sealing occurs between the collar 3 and the neck 7. The collar 3 may be attached to the neck 7 of body 2 either manually or by machine. To avoid the collar 3 loosening, an adhesive may be applied to either or both of the screw threads 40 or 41 just prior to assembly, such that once the adhesive has set, the collar 3 may not be removed. The valve 4 may thereafter be supplied to the collar 3 and be crimped thereto just as with the earlier embodiment hereinbefore described.

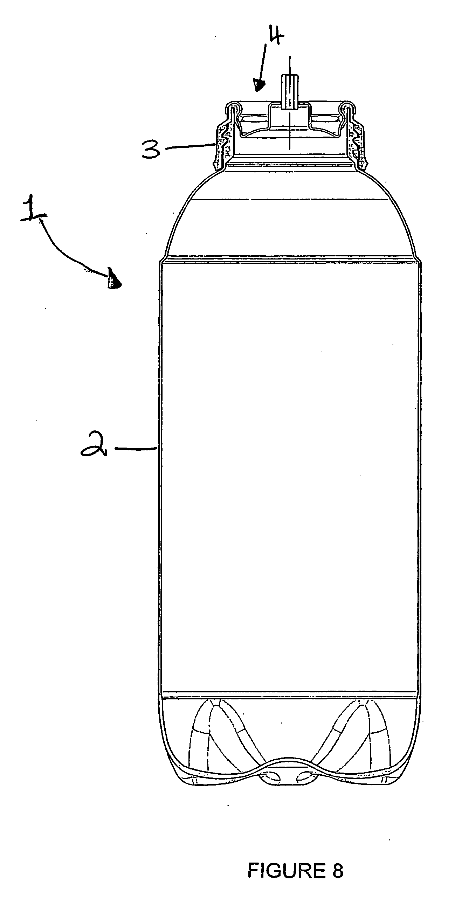

Figure 8 illustrates the various components of this screw on collar container in their assembled position, with the upper components, namely the collar 3 and valve 4, partially cut away for ease of understanding.

It will be appreciated that by utilising a collar as herein described, a PET type aerosol container is formed which, due to this unique design of the collar shrouding the opening, is capable of holding a higher pressure than that of the prior art plastics containers. It still has the advantages that the collar will not separate from the container, particularly during the manufacturing process, as described in the Applicant's aforementioned Patent application, due to the snap-fitting or screw-on engagement of the collar to the container.

It should be noted that the means by which the dispensing valve 4 is attached to the lip 35 of the collar 3, enables a good seal to be created, such that the product provided within the container 1 is not permitted to escape. It will be appreciated that additional sealing, by utilising, for example, flexible rubber material or the like between these components, may additionally be provided if desired.

It will be appreciated that the means by which the valves are crimped to the traditional metal prior art containers may be similarly used in the present invention. The rigidity of the collar utilised in the present invention permits this traditional type crimping tool to be utilised without breaking the PET container and components. It will appreciated by persons skilled in the art that crimping metal directly to PET does cause stress to the container, which, over time can cause the container to crack and cause leaking. However, by utilising the injection moulded collar in accordance with the present invention, this disadvantage does not occur.

The shoulder portions 37 and 38 (see Fig. 4), where the collar 3 contacts the container 1 during the assembly process, are preferably designed such that they allow for smooth entry therethrough, to minimise jamming as the components are assembled. Persons skilled in the art will recognise acceptable curvatures of these shoulders.

The arm 39 of the collar 3 acts as a guide during the assembly of the collar 3 to the container 1, such that, if there is any misalignment, this may be corrected. Furthermore, when the valve 4 is inserted into the container 1, the arm 39 assists in the assembly operation by pushing the flange to open up a small amount, such that this whole section then pinches the collar 3 to the container 1, whilst it is in slot 32.

The slot 32, where the PET container 1 is pinched by the portion 40 of the collar 3, creates a secondary seal between the container 1 and the collar 3. Under high pressure and heat, the PET container 1 will give before the collar 3, allowing the gas to escape at the top of slot 32, therefore not allowing the container 1 to explode. The slot 32 also protects the PET container 1 from having any direct contact with the metal valve crimp area.

The exterior portion 41 of the lip 35 will be noticed to be slightly flattened, i.e. the lip 35 does not continue to curl, such that various types of valve presently available on the market place can all be installed onto the lip 35 of the present invention.

The rebate 42 at the periphery of the lip 35 has been provided taking into consideration the various sprays available in the market place, noting that these special dispensing sprayers can be attached thereto to the container 1, if desired.

A strengthening shoulder 43 may be provided on the collar 3, to provide stiffening and/or increased strength, which may be particularly useful during the crimping process when forces are applied thereto.

The skirt 44 of the collar 3 is provided such that it gives an appealing visual appearance to the overall container 1, whilst the container 1 below, hidden by this skirt 44 may still provides strengthening ribs 19, etc., for structural rigidity of the container.

It will be appreciated that the container described in the present invention has advantages over conventional type metal aerosol containers, and, provides an alternative to the PET type plastics container described in the Applicant's aforementioned application. It will be appreciated that, whilst particular embodiments have been hereinbefore described, variations and modifications may be made to the shape and configuration of the container, whilst still achieving the advantages of the invention. All such variations and modifications should be considered to be within the scope of the invention as hereinbefore described.

It will be appreciated that the method and manufacture of the container is similar to that described in the Applicant's aforementioned application, with the exception that the collar is differently formed to achieve the advantages hereinbefore described. That is, the collar may still be snap fitted or screwed on to the top of the container and, due to its shrouding of the opening of the container, it is not prone to be bumped off the top of the container during the on-going manufacturing and assembly process.

Obviously the plastics aerosol container of the present invention will be capable of dispensing a variety or products, including all products known to be currently dispensed from metal aerosol containers. The plastics aerosol container, formed of PET material, however, has the significant advantage that it can be readily recycled, and is thus more environmentally friendly.

It will be appreciated that numerous variations and modifications may be made to the container and the method of manufacture of the container.

## Claims

1. An aerosol container (1) for dispensing a pressurised product, said container (1) including:
a body (2), formed of PET or like plastics material, said body (2) having a shaped neck (7) about an opening (10);
a collar (3) which straddles the external and internal walls (33, 34) of said opening (10) to form a shaped lip (35) therearound, and, be attached to said body (2); and,
a dispensing valve (4) attached to said collar (3), said valve (4) including an outer flange (11) formed of malleable material and which is shaped to straddle said lip (35) and be retained thereto by being compressed therearound.

2. A container (1) as claimed in claim 1,
wherein said external wall of said shaped neck (7) includes a recess (9) therearound, and said collar (3) includes an annular protrusion (20) extending inwardly therefrom, such that said protrusion (30) cooperates with said recess (4), such that said collar (3) is snap-fitted to said neck (7) of said body (2).

3. A container (1) as claimed in claim 1,
wherein said external wall of said shaped neck (7) includes an annular protrusion therearound, and said collar (3) includes an annular recess on its inside wall, such that said protrusion cooperates with said recess, such that said collar (3) is snap-fitted to said neck (7) of said body (2).

4. A container (1) as claimed in claim 1,
wherein said collar (3) and said shaped neck (7) are provided with cooperating screw threads (40, 41), such that said collar (3) is screwed onto said neck (7) of said body (2).

5. A container (1) as claimed in any one of claims 1 to 4,
wherein said collar (3) is formed of PET or like plastics material.

6. A container (1) as claimed in any one of claims 1 to 5,
wherein one or more strengthening ribs (19) (protruding internally and externally) are provided therearound.

7. A container (1) as claimed in any one of claims 1 to 6,
wherein said body (2) is provided with lid engaging means, for releasable engagement of a lid.

8. A container (1) as claimed in any one of claims 1 to 7,
wherein said body (2) is provided with base engagement means, for a base (6) to be attached thereto.

## Patentansprüche

1. Aerosolbehälter (1) zum Abgeben eines unter Druck stehenden Produkts, wobei der Behälter (1) aufweist:
einen aus PET oder ähnlichem Kunststoffmaterial gebildeten Körper (2), wobei der Körper (2) um eine Öffnung (10) herum einen geformten Hals (7) hat,
einen Kragen (3), der die äußere und innere Wandung (33, 34) der Öffnung (10) übergreift, um um sie herum eine geformte Lippe (35) zu bilden und an dem Körper (2) befestigt zu sein, und
ein an dem Kragen (3) befestigtes Abgabeventil (4), wobei das Ventil (4) einen aus verformbarem Material gebildeten äußeren Flansch (11) umfasst, der dazu geformt ist, die Lippe (35) zu übergreifen und an ihr durch Zusammenpressen um sie herum gehalten zu werden.

2. Behälter (1) nach Anspruch 1,
bei dem die äußere Wandung des geformten Halses (7) um diesen herum eine Ausnehmung (9) aufweist und der Kragen (3) einen sich von ihm einwärts erstreckenden ringförmigen Vorsprung (30) aufweist, so dass der Vorsprung (30) mit der Ausnehmung (9) derart zusammenwirkt, dass der Kragen (3) auf dem Hals (7) des Körpers (2) verrastet.

3. Behälter (1) nach Anspruch 1,
bei dem die äußere Wandung des geformten Halses (7) um ihn herum einen ringförmigen Vorsprung aufweist und der Kragen (3) eine ringförmige Ausnehmung auf seiner innenseitigen Wandung aufweist, so dass der Vorsprung mit der Ausnehmung derart zusammenwirkt, dass der Kragen (3) auf dem Hals (7) des Körpers (2) verrastet.

4. Behälter (1) nach Anspruch 1,
bei dem der Kragen (3) und der geformte Hals (7) mit zusammenwirkenden Schraubgewinden (40, 41) versehen sind, so dass der Kragen (3) auf den Hals (7) des Körpers (2) geschraubt ist.

5. Behälter (1) nach einem der Ansprüche 1 bis 4,
bei dem der Kragen (3) aus PET oder ähnlichem Kunststoffmaterial geformt ist.

6. Behälter (1) nach einem der Ansprüche 1 bis 5,
bei dem eine oder mehrere (nach innen und nach außen vorspringende) Verstärkungsrippen (19) um ihn herum vorhanden sind.

7. Behälter (1) nach einem der Ansprüche 1 bis 6,
bei dem der Körper (2) mit einer Eingriffseinrichtung für einen Deckel zum lösbaren Ineingriffkommen eines Deckels versehen ist.

8. Behälter (1) nach einem der Ansprüche 1 bis 7,
bei dem der Körper (2) mit einer Eingriffseinrichtung für einen Boden zum daran Befestigen eines Bodens (6) versehen ist.

## Revendications

1. Récipient (1) pour aérosol pour distribuer un produit sous pression, ledit récipient (1) incluant :
un corps (2), formé de PET ou d'un matériau plastique similaire, ledit corps (2) ayant un col (7) conformé autour d'une ouverture (10) ;
un collier (3) qui chevauche les parois externe et interne (33, 34) de ladite ouverture (10) pour former une lèvre (35) conformée autour de celle-ci et pour être fixé audit corps (2) ; et
une soupape (4) de distribution fixée audit collier (3), ladite soupape (4) incluant un rebord extérieur (11) formé d'un matériau malléable et qui est conformée pour chevaucher ladite lèvre (35) et être retenue sur celle-ci en étant comprimée autour de celle-ci.

2. Récipient (1) selon la revendication 1,
dans lequel ladite paroi externe dudit col (7) conformé inclut un renfoncement (9) autour de celle-ci, et ledit collier (3) inclut une saillie (30) annulaire s'étendant vers l'intérieur à partir de celui-ci, de telle sorte que ladite saillie (30) coopère avec ledit renfoncement (9), de telle sorte que ledit collier (3) est ajusté par encliquetage sur ledit col (7) dudit corps (2).

3. Récipient (1) selon la revendication 1,
dans lequel ladite paroi externe dudit col (7) conformé inclut une saillie annulaire autour de celle-ci, et ledit collier (3) inclut un renfoncement annulaire sur sa paroi intérieure, de telle sorte que ladite saillie coopère avec ledit renfoncement, de telle sorte que ledit collier (3) est ajusté par encliquetage sur ledit col (7) dudit corps (2).

4. Récipient (1) selon la revendication 1,
dans lequel ledit collier (3) et ledit col (7) conformé sont prévus avec des filets de vis (40, 41) coopérants, de telle sorte que ledit collier (3) est vissé sur ledit col (7) dudit corps (2).

5. Récipient (1) selon l'une quelconque des revendications 1 à 4,
dans lequel ledit collier (3) est formé de PET ou d'un matériau plastique similaire.

6. Récipient (1) selon l'une quelconque des revendications 1 à 5,
dans lequel une ou plusieurs nervures de renfort (19) (faisant saillie vers l'intérieur et vers l'extérieur) sont prévues autour de celui-ci.

7. Récipient (1) selon l'une quelconque des revendications 1 à 6,
dans lequel ledit corps (2) est prévu avec un moyen d'engagement de capuchon, pour un engagement libérable d'un capuchon.

8. Récipient (1) selon l'une quelconque des revendications 1 à 7,
dans lequel ledit corps (2) est prévu avec un moyen d'engagement de base, pour qu'une base (6) soit fixée à celui-ci.
